**Europäisches Patentamt**

**European Patent Office**

**Office européen des brevets**

(19)

(11) Veröffentlichungsnummer: **0 050 787 B1**

# (12) EUROPÄISCHE PATENTSCHRIFT

(45) Veröffentlichungstag der Patentschrift:
**08.08.84**

(21) Anmeldenummer: **81108259.3**

(22) Anmeldetag: **13.10.81**

(51) Int. Cl.³: **F 23 D 13/10,** F 23 D 13/36, F 23 D 13/46, F 24 C 3/08

(54) **Kochstelle für Gasherde.**

(30) Priorität: **23.10.80 DE 3039982**

(43) Veröffentlichungstag der Anmeldung:
**05.05.82 Patentblatt 82/18**

(45) Bekanntmachung des Hinweises auf die Patenterteilung:
**08.08.84 Patentblatt 84/32**

(84) Benannte Vertragsstaaten:
**AT BE DE FR GB IT NL**

(56) Entgegenhaltungen:
**CH - A - 299 979**
**DE - A - 1 629 933**
**DE - A - 2 649 454**
**US - A - 1 939 941**
**US - A - 3 114 411**
**US - A - 3 675 905**
**US - A - 3 975 140**

(73) Patentinhaber: **Ruhrgas Aktiengesellschaft, Huttropstrasse 60 Postfach 10 32 52, D-4300 Essen 1 (DE)**

(72) Erfinder: **Sommers, Hans, Dipl.-Ing., Friedrich-List-Strasse 9, D-4300 Essen 1 (DE)**
Erfinder: **Hanselmann, Dieter, Ing. grad., Gathestrasse 12, D-4330 Mülheim/Ruhr (DE)**

## Beschreibung

Die Erfindung betrifft eine Kochstelle für Gasherde, deren Brenner mit überstöchiometrischer Verbrennungsluftvormischung betrieben wird, bestehend aus einem in einer Brennermulde angeordneten Brennerkopf, einem mit dem Brennerkopf verbundenen Mischrohr, durch das das Gas-Verbrennungsluft-Gemisch dem Brennerkopf zugeführt wird, und einer vor dem Mischrohr angeordneten Gasdüse, aus der der Gasstrahl austritt und die gesamte Verbrennungsluft ansaugt.

Die zur Zeit gebräuchlichen Kochstellen für Gasherde sind in der Regel mit Injektorbrennern, die mit unterstöchiometrischer Primärluftvormischung arbeiten, ausgerüstet. Die zusätzlich zur vollständigen Verbrennung notwendige Sekundärluft diffundiert unkontrolliert bzw. ungeregelt in die sich an den Gemischaustrittsöffnungen im Brennerkopf bildenden Flammen. Dies wirkt sich im gesamten Arbeitsbereich negativ auf den Wirkungsgrad des Brenners aus, d. h. die zugeführte Wärmeenergie wird sowohl im Nenn- als auch im Teillastbereich nicht optimal ausgenutzt. Außerdem bedingt die unterstöchiometrische Vormischflamme einen verhältnismäßig großen Stickstoffoxidanteil im Abgas, das meistens in den Aufstellungsraum des Gerätes austritt. Verbesserungswürdig ist auch die sogenannte Kleinstellwärmebelastung. Die Wärmebelastung eines Kochstellenbrenners ist zwischen einer Großstellung, d. h. der Nennwärmebelastung, und einer minimalen Kleinstellung, der Kleinstellwärmebelastung, stufenlos regulierbar. Diese darf nach der geltenden Norm einen bestimmten Teil der Nennwärmebelastung nicht überschreiten. Diese Anforderung wird von gebräuchlichen Kochstellenbrennern zwar erfüllt, jedoch zeigt die Praxis, insbesondere bei mit Erdgas betriebenen Herden, daß die Kleinstellwärmebelastung ein verbesserungswürdiger Punkt ist.

Weitere Anforderungen an den Kochstellenbrenner werden dadurch gestellt, daß in der Bundesrepublik Deutschland zunehmend Erdgase mit verschiedenen Wobbe-Indizes verteilt werden, die in der sogenannten zweiten Gasfamilie zusammengefaßt sind. Da Gaswechsel innerhalb einer Gasfamilie — ohne Veränderungen am Brenner durchzuführen — möglich sein müssen, muß ein Kochstellenbrenner innerhalb eines möglichst großen Einsatzbereiches von Gasen mit verschiedenen Wobbe-Indizes, dem sogenannten Wobbe-Index-Bereich, den Erfordernissen hinsichtlich Zündung, Verbrennungsgüte und Flammenstabilität insbesondere bei der Kleinstellwärmebelastung genügen.

Aus der Fachliteratur ist bekannt, daß durch überstöchiometrische Vormischung, d. h. dadurch, daß dem Brenner die gesamte an der Verbrennung beteiligte Luft durch das Mischrohr zugeführt wird — ohne Sekundärluftzutritt an die Flammen —, ein schadstoffarmes Abgas erreicht werden kann und gleichzeitig eine bessere Energieausnutzung, insbesondere im Teillastbereich eintritt.

Es ist jedoch noch kein Brenner bekannt, bei dem die Probleme, die aufgrund der großen Verbrennungsluftmengen auftreten, insbesondere die ungenügende Flammenstabilität, konstruktiv gelöst sind.

Es ist zwar eine gattungsgemäße Kochstelle bekannt (DE-A-2 649 454), deren Brenner mit überstöchiometrischer Primärluftzumischung unter Ausschluß von Sekundärluftzutritt an die Flammen arbeitet. Jedoch ist der Brenner dieser Kochstelle konstruktiv sehr aufwendig, da er zwei getrennte Düsen-Mischrohr-Einrichtungen zur Bildung des Gas-Luftgemisches für eine Hauptflamme und für eine Halteflamme besitzt.

Weil die Abgase dieses Brenners vorwiegend durch schmale Rillen in der Brennermulde nach außen strömen und vorzugsweise dort Wärme an den Topfboden abgeben, ist eine Wirkungsgradsteigerung nicht in dem erwarteten Maß eingetreten.

Der Erfindung liegt die Aufgabe zugrunde, eine gattungsgemäße Kochstelle zu schaffen, deren Brenner mit konstruktiv einfachen Mitteln eine optimale Ausnutzung der zugeführten Wärmeenergie sowohl bei Nennwärmebelastung als auch im Teillastbereich erlaubt. Der Brenner soll eine gute Zündung, stabiles Flammenverhalten, eine einwandfreie Verbrennung und ein schadstoffarmes Abgas bei der Nenn- und der Kleinstellwärmebelastung innerhalb eines großen Einsatzbereiches von Gasen mit unterschiedlichen Wobbe-Indizes aufweisen.

Diese Aufgabe wird erfindungsgemäß gelöst durch die in den Ansprüchen 1 bis 12 genannten Merkmale und Maßnahmen.

Erfindungsgegenstand ist demgemäß eine Kochstelle, deren Brenner mit überstöchiometrischer Luftvormischung betrieben wird, wobei die Luftzahl, d. h. das Verhältnis von zugeführter Verbrennungsluft zur Menge der zur vollständigen Verbrennung benötigten Luft, etwa 1,05 bis 1,70 beträgt.

Der erfindungsgemäße Brennerkopf weist zwei konzentrisch zur Brennerkopfachse angeordnete perforierte, gegen Hitze und reduzierende sowie oxidierende Atmosphäre beständige, vorzugsweise aus aluminiumhaltigem und nickelfreiem Chromstahl oder Keramik bestehende Flammenlochringe auf, durch die das Gas-Luft-Gemisch austritt und gezündet wird. Die Austrittsöffnungen des inneren Flammenlochringes haben einen hydraulischen Durchmesser von kleiner als 1,2 mm, vorteilhafterweise 1,2 mm bis 0,8 mm, die des äußeren Flammenlochringes dagegen einen solchen von größer als 1,2 mm, vorteilhafterweise 1,2 mm bis 3 mm.

Damit wird folgendes erreicht:

Im Beharrungszustand, der kurz nach der Zündung erreicht wird, brennen die Flammen am inneren Flammenlochring. Dabei erhitzen sie den äußeren Flammenlochring so stark, daß ein metallischer Flammenlochring zu glühen beginnt. Die vorher genannten hydraulischen Durchmesser der Flammenaustrittsöffnungen verhindern einerseits, daß die am inneren Ring brennenden Flammen zurückschlagen können und gewährleisten andererseits, daß ggf. die anfangs am äußeren Ring brennenden Flammen zurückschlagen können. Eine Flammenausbildung auf dem äußeren Ring, d. h. ein »Auswandern« der Flammen vom inneren zum äußeren Ring, ist jedoch nicht möglich, so lange der äußere Flammenlochring hoch erhitzt bzw. glühend ist. Die Stabilität der am inneren Ring brennenden Flammen wird durch die Wirkung des heißen bzw. glühenden äußeren Flammenlochringes besonders wirkungsvoll gewährleistet.

Bei offener Kochstelle ist der Brennerkopf in eine Brennermulde eingebettet, die so geformt ist, daß die Geschwindigkeit des nach außen strömenden Abgases an allen Stellen weitgehend konstant ist, was einen guten Wärmeübergang durch Konvektion auf den Topfboden und die Brennermulde gewährleistet. Die Aufheizung des Topfbodens erfolgt nicht allein durch Konvektion, sondern auch durch Wärmestrahlung, die von der Muldenoberfläche und vom äußeren Flammenlochring ausgeht.

Das Material bzw. die Wandstärke der Brennermulde ist so gewählt, daß sie nur eine geringe Wärmekapazität besitzt und deshalb nur wenig Wärme speichert, was sich günstig auf die Aufheizzeit des Topfes auswirkt.

Eine Beschichtung der Brennermuldenunterseite mit einem Material mit geringem Emissionsvermögen und ein unterhalb der Brennermulde befindlicher Reflektor verhindern, daß wesentliche Wärmemengen nach unten abgestrahlt werden.

Als Auflageflächen für den Topf dienen mehrere auf der Brennermulde angebrachte Tragrippen sowie der Brennerkopf, dessen Deckel den Topf berührt. Die direkte Kühlung des Brennerkopfes durch den auf ihm stehenden Topf wirkt sich günstig auf den Betrieb des Brenners aus.

Wird die Kochstelle nach Anspruch 1 von einer Abdeckplatte nach Anspruch 2 abgedeckt, so ergibt sich gegenüber konventionellen Gasherd-Kochstellen ein verbesserter Ankochwirkungsgrad.

Der Brenner der erfindungsgemäßen Kochstelle weist durch die überstöchiometrische Luftvormischung alle durch diese bedingten Vorteile auf, insbesondere eine schadstoffarmes Abgas und eine Wirkungsgradverbesserung gegenüber bekannten Brennern.

Trotz der großen an der Verbrennung beteiligten Luftmengen werden mit einfachen konstruktiven Mitteln äußerst stabile Flammen in einem großen Belastungsbereich erreicht, so daß auch bei einer geringen Kleinstellwärmebelastung eine hygienisch einwandfreie Verbrennung möglich ist.

Dies gilt für den Einsatz aller Gase mit verschiedenen Wobbe-Indizes innerhalb einer Gasfamilie.

Die erfindungsgemäße Kochstelle wird nachstehend anhand einer in der Zeichnung dargestellten beispielsweisen Ausführungsform weiter erläutert.

Fig. 1 zeigt die Vorderansicht einer offenen Kochstelle — mit Ausnahme des Brennerkopfes — im Schnitt.

Fig. 2 zeigt die Draufsicht der Kochstelle.

Fig. 3 zeigt den Brennerkopf in vergrößerter Darstellung und teilweise senkrechtem Schnitt.

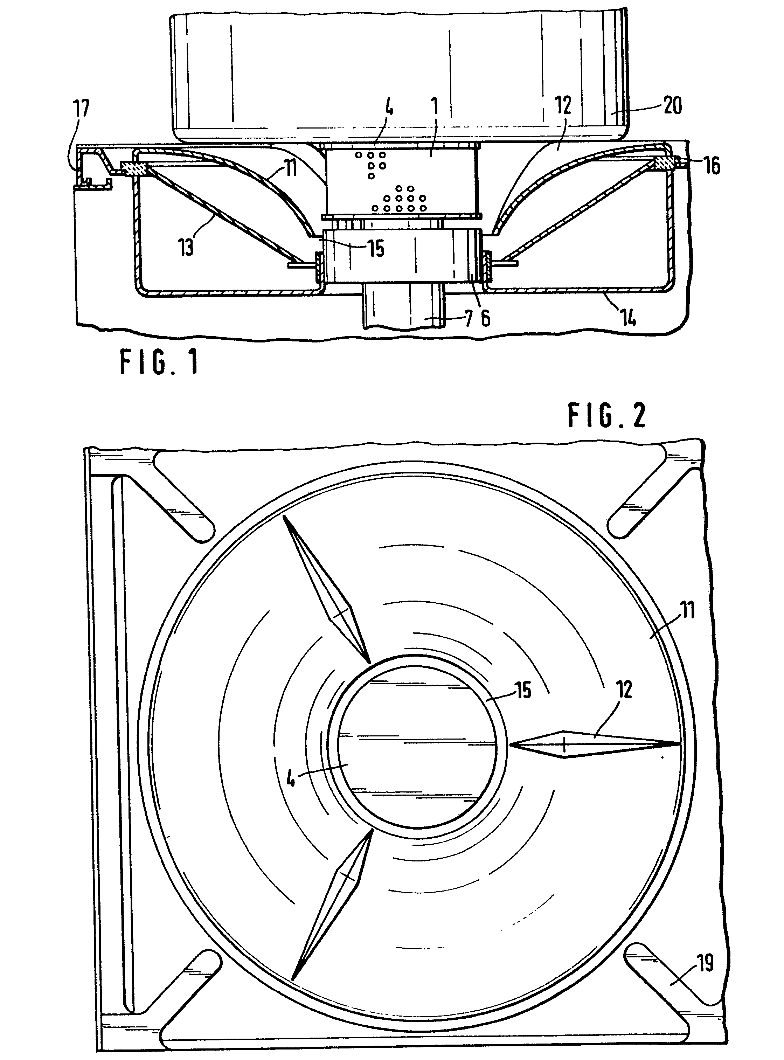

In Fig. 1 und 2 ist eine von mehreren Kochstellen eines Gasherdes dargestellt.

Brennerkopf 1 befindet sich mittig in einer kreisförmigen Brennermulde 11, die in die Herdmuldenplatte 17 eingelassen ist. Die Brennermulde ist von innen nach außen gewölbt und weist drei radial angeordnete Tragrippen 12 auf, deren Oberseite mit der Oberseite des Brennerkopfdeckels 4 und mit der Oberseite weiterer Herdtragrippen 19, die auf der Herdmuldenplatte 17 angebracht sind, in gleicher Höhe liegen und so eine Auflagefläche für den Topf 20 bilden. Mit Hilfe der Herdtragrippen 19 ist es möglich, den Topf problemlos von der Kochstelle weg oder auf eine andere zu schieben.

Die Brennermulde 11 besteht aus Edelstahlblech mit einer Dicke von ca. 0,5 mm, weshalb sie wenig Wärme speichert, was sich günstig auf die Aufheizzeit des Topfes auswirkt. Sie ist außerdem vorteilhafterweise auf ihrer Unterseite mit einer dünnen Aluminiumbeschichtung versehen. Da das Emissionsvermögen von Aluminium geringer ist als das vom Edelstahl, wird auf diese Weise erreicht, daß die von der Brennermulde aufgenommene Wärme vorzugsweise nach oben, d. h. in Richtung auf den Topfboden abgestrahlt wird.

Um das Abstrahlen von Wärme nach unten noch weiter zu verringern, ist unterhalb der Brennermulde 11 in der Auffangmulde 14 für eventuelles Überkochgut ein Reflektor 13 angeordnet, der die von der Brennermulde 11 nach unten abgestrahlte Wärme weitgehend zurückstrahlt und durch seine Form eine konvektive Wärmeabgabe nach unten stark behindert.

Die Auffangmulde 14, die zur Aufnahme von eventuell überfließendem Kochgut, das durch die ringförmige Durchtrittsöffnung 15 in der Brennermulde nach unten abfließt, dient, ist zusammen mit der Brennermulde 11 mit einem Dichtungsring 16 gegenüber der Herdmuldenplatte 17 luftdicht und wärmeisoliert abgeschlossen.

Um den Wärmeübergang vom Brennerkopf 1 auf das Mischrohr 7 weitgehend zu unterbinden, ist der Brennerkopf 1 mit dem Mischrohr 7 über einen aus Keramik bestehenden Isolierring 6 verbunden.

Der Brennerkopf 1 besteht im wesentlichen aus den zwischen Brennerkopfboden 5 und Brennerkopfdeckel angeordneten perforierten inneren und äußeren Flammenlochringen 2 und 3. Diese bestehen aus einem aluminiumhaltigen und nickelfreien Chromstahlblech.

Durch den Gasstrahl, der aus der Gasdüse 18 austritt, wird die gesamte Verbrennungsluft angesaugt. Das durch das Mischrohr 7 dem Brennerkopf 1 zugeführte Gas-Verbrennungsluftgemisch wird gezündet, wobei im Beharrungszustand die Flammen am inneren Flammenlochring 2 brennen und den äußeren Flammenlochring 3 fortlaufend weiter erhitzen, so daß dieser glüht und Wärme abstrahlt.

Die beiden Flammenlochringe werden von oben durch einen flachen Brennerkopfdeckel 4 abgedeckt, so daß kein überlaufendes Kochgut in oder an die Flammenlochringe gelangen kann.

Im Ringraum zwischen innerem und äußerem Flammenlochring sind die Zünd- und die Zündsicherungseinrichtung 9, 10 angeordnet. Durch diese besonders geschützte Unterbringung ist die Gefahr der Beschädigung oder Verschmutzung dieser Bauteile sehr gering. Die Zündeinrichtung 9 wird vorzugsweise durch einen Zündflammenbrenner ergänzt.

Am Brennerboden 5 ist eine bi-metall-gesteuerte Kaltstartklappe 8 so eingebaut, daß im Anfahrzustand dem Gas-Luft-Gemischstrom ein zusätzlicher Strömungswiderstand entgegenwirkt, so daß die Luftzahl beim Start des Brennerbetriebes etwas gleichgroß ist wie im Beharrungszustand. Dadurch wird eine einwandfreie Zündung des überstöchiometrischen Gas-Verbrennungsluftgemisches gewährleistet.

Brennerkopfdeckel 4, Flammenlochringe 2 und 3, Brennermulde 11, Reflektor 13 und Auffangmulde 14 können zu Säuberungszwecken demontiert werden.

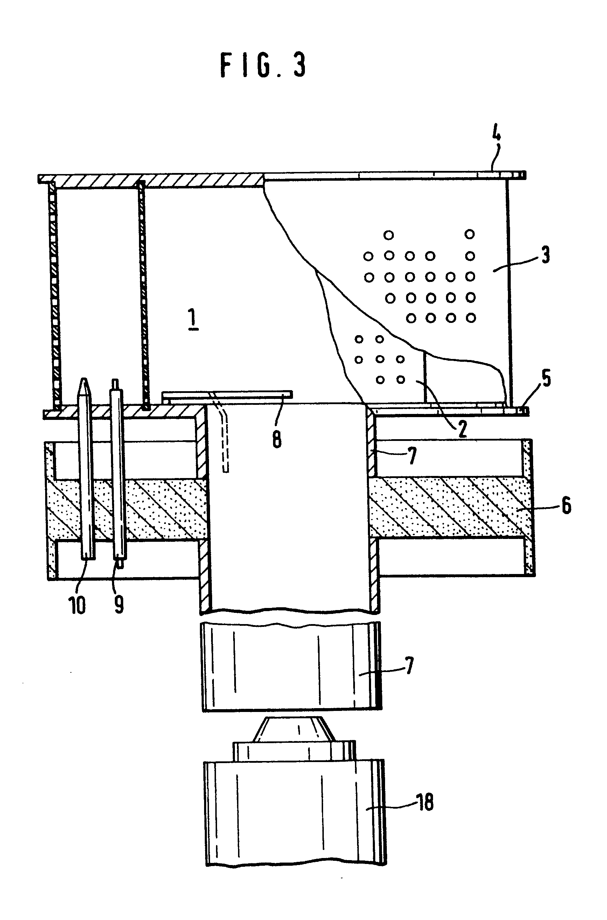

Bei einer weiteren, nicht dargestellten Ausführungsform ist der Brenner durch eine strahlungsdurchlässige Abdeckplatte, vorzugsweise eine Glaskeramikplatte, abgedeckt. Die Platte ist abgedichtet mit dem Herd verbunden und überdeckt alle Kochstellen. Der Brenner entspricht der in Fig. 3 dargestellten Ausführungsform. Die Brennermulde wird von einem kegelstumpfförmigen Reflektor gebildet, unterhalb dessen sich zur weiteren Reduzierung der nach unten gerichteten Wärmestrahlung ein weiterer Reflektor befindet. Zwischen dem oberen Reflektor und der Abdeckplatte befinden sich einige Abstandhalter, die an der Abdeckplatte anliegen. Das Abgas wird mit Hilfe von Abgasführungsblechen nach hinten weggeführt. Letztere können in einer für alle Kochstellen eines Herdes gemeinsamen Abgasmulde angeordnet sein, die vorzugsweise mit einer nach oben reflektierenden Isolierschicht ausgekleidet ist. Der Brennerkopf steht erfindungsgemäß mit der Abdeckplatte in Berührung. Zur Gewährleistung dieser Berührung und zur Erhöhung der Bruchsicherheit kann die gesamte Kochstelle, also der Brenner einschließlich der Reflektoren, federnd gelagert sein. Ist eine gemeinsame Abgasmulde vorgesehen, so wird auch diese federnd gelagert.

Bei abgedeckter Kochstelle ist die Verwendung eines keramischen Brennerkopfdeckels und Brennerbodens besonders vorteilhaft, weil dadurch die Gefahr einer Überhitzung des Brennerinnenraumes (Überschreiten der Zündtemperatur) verhindert wird, wie sie bei Stahlkonstruktionen durch Wärmeleitung von den heißen Brenneraußenflächen zum gasgekühlten Inneren auftreten kann.

Versuche haben gezeigt, daß, bedingt durch die erfindungsgemäße Konstruktion, der Ankochwirkungsgrad selbst bei kleinen Topfdurchmessern außerordentlich hoch ist.

**Patentansprüche**

1. Kochstelle für Gasherde, deren Brenner mit überstöchiometrischer Verbrennungsluftvormischung betrieben wird, bestehend aus einem in einer Brennermule (11) angeordneten Brennerkopf (1), einem mit dem Brennerkopf verbundenen Mischrohr (7), durch das das Gas-Verbrennungsluft-Gemisch dem Brennerkopf zugeführt wird, und einer vor dem Mischrohr angeordneten Gasdüse (18), aus der der Gasstrahl austritt und die gesamte Verbrennungsluft ansaugt, dadurch gekennzeichnet, daß der Brennerkopf (1), der über einen keramischen Isolierring (6) mit dem Mischrohr (7) verbunden ist, einen inneren und einen äußeren gegen Hitze und reduzierende sowie oxidierende Atmosphäre beständigen perforierten Flammenlochring (2, 3) aufweist, die beide konzentrisch zur Brennerachse zwischen Brennerkopfboden (5) und Brennerkopfdeckel mit flacher Oberseite (4) angeordnet sind, und daß nur die Perforierung des inneren Flammenlochringes (2) derart dimensioniert ist, daß die Flammen nicht zurückschlagen können.

2. Kochstelle nach Anspruch 1, mit einer strahlungsdurchlässigen Abdeckplatte, vorzugsweise aus Glaskeramik oder dergleichen, dadurch gekennzeichnet, daß der Brennerkopfdeckel (4) mit der Abdeckplatte in Berührung steht, daß die aus korrosionsbeständigem Metallblech bestehende Brennermulde (11) durch einen vorzugsweise kegelstumpfförmigen Reflektor (13) gebildet wird, unterhalb dessen sich mindestens ein weiterer Reflektor befindet und daß mindestens der Brennerkopf federnd gelagert ist.

3. Kochstelle nach Anspruch 1, dadurch gekennzeichnet, daß die aus korrosionsbeständigem Metallblech bestehende Brennermulde (11) derart aufwärts gewölbt ist, daß der Abstand zwischen Topfboden (20) und Brennermulde (11) von innen nach außen kontinuierlich abnimmt, daß die Brennermulde (11) mehrere radial angeordnete Tragrippen (12) und eine Durchtrittsöffnung (15) für eventuelles Überkochgut aufweist und daß der Brennerkopf (1) derart in die Brennermulde (11) eingebettet ist, daß die Oberseite des Brennerkopfdeckels (4) mit der Oberseite der Tragrippen (12) auf gleicher Höhe liegt, und daß sich ein Reflektor (13) unterhalb der Brennermulde (11) in der Auffangmulde (14) befindet.

4. Kochstelle nach einem der Ansprüche 1 bis 3, dadurch gekennzeichnet, daß der hydraulische Durchmesser der Austrittsöffnungen des inneren Flammenlochringes (2) weniger als 1,2 mm, vorzugsweise 1,2 mm bis 3,0 mm beträgt.

5. Kochstelle nach einem der Ansprüche 1 bis 4, dadurch gekennzeichnet, daß die Flammenlochringe (2, 3) aus aluminiumhaltigem und nikkelfreiem Chromstahl bestehen.

6. Kochstelle nach einem der Ansprüche 1 bis 4, dadurch gekennzeichnet, daß die Flammenlochringe (2, 3) aus Keramik bestehen.

7. Kochstelle nach einem der Ansprüche 1 bis 6, dadurch gekennzeichnet, daß der Brennerkopfdeckel (4) und vorzugsweise auch der Brennerboden (5) aus keramischem Material bestehen.

8. Kochstelle nach Anspruch 7, dadurch gekennzeichnet, daß der Brennerboden (5) mit dem Isolierring (6) aus einem Stück besteht.

9. Kochstelle nach einem der Ansprüche 1 bis 8, dadurch gekennzeichnet, daß im Ringraum zwischen innerem und äußerem Flammenlochring (2, 3) die Zünd- und die Zündsicherungseinrichtung (9, 10) angeordnet sind.

10. Kochstelle nach einem der Ansprüche 1 bis 9, dadurch gekennzeichnet, daß am Brennerkopfboden (5) eine thermisch-, vorzugsweise bimetall-gesteuerte Kaltstartklappe (8) angeordnet ist.

11. Kochstelle nach einem der Ansprüche 3 bis 10, dadurch gekennzeichner, daß die Brennermulde (11) aus Edelstahl oder aus emailliertem Eisenblech besteht, dessen Stärke weniger als ca. 1 mm, vorzugsweise weniger als 0,5 mm beträgt.

12. Kochstelle nach einem der Ansprüche 3 bis 11, dadurch gekennzeichnet, daß die Brennermulde (11) auf ihrer Unterseite mit einer dünnen Beschichtung, die ein geringeres Emissionsverhältnis besitzt, vorzugsweise einer Aluminiumschicht, versehen ist.

## Claims

1. A hotplate for gas cookers equipped with pre-mixed burners combusting a fuel-lean gas/air mixture consisting of a burner head (1) arranged in a tray (11), a burner mixing tube (7) connected to said burner head for taking the gas/air mixture to said burner head and an injector (18) upstream of said mixing tube with the gas issuing from said injector entraining the entire combustion air characterized in that said burner head (1) connected with said mixing tube (7) by way of a ceramic insulating ring is fitted with an inner flame port ring (2) and an outer flame port ring (3) both said rings being resistant to heat as well as reducing and oxydizing atmospheres and both said rings being concentric relative to the burner axis and arranged between the burner body (5) and the flat-top burner cap (4) and in that said inner flame port ring (2) is designed to prevent light-back or flash-back.

2. A hotplate according to claim 1 fitted with a cover plate made preferably from ceramic or a similar material allowing thermal radiation to pass to the pan or pot being heated characterized in that the burner cap (4) is in contact with said cover plate and that the tray (11) made of corrosionresistant sheet metal represents a reflector (13) preferably of a truncated cone shape below which not less than one additional reflector is arranged and that the burner head mounting and if desired any other mounting of the burner means is not rigid.

3. A hot plate according to claim 1, characterized in that tray (11) made of corrosion-resistant sheet metal has a concave shape so that the distance between the port or pan being heated (20) and the tray (11) continuously decreases from the center to the circukference of said tray and that said tray (11) incorporates several pan rests (12) arranged radially and an opening (15) for any spillage and that the burner head (1) is bedded in said tray (11) so that the top of the burner cap (4) and the top of said pan rest (12) are level and that a reflector (13) is arranged in the spillage tray (14) below tray (11).

4. A hotplate according to any of claims 1 through 3 characterized in that the equivalent diameters of the ports in the inner flame port ring (2) are less than 1.2 mm and preferably 0.8 mm to 1.2 mm and that the equivalent diameters of the ports in the outer flame port ring (3) are more than 1.2 mm and preferably 1.2 mm to 3.0 mm.

5. A hotplate according to any of claims 1 through 4 characterized in that the flame port ring (2, 3) are made of chromium steel containing aluminium and not containing any nickel.

6. A hotplate according to any of claims 1 through 4 characterized in that the flame port rings (2, 3) are made of ceramic material.

7. A hotplate according to any of claims 1 through 6 characterized in that the burner cap 4 and preferably the burner body (5) are made of ceramic material.

8. A hotplate according to claim 7 characterized in that the burner body (5) and the insulating ring (6) are a mono-block element.

9. A hotplate according to any of claims 1 through 8 characrerized in that the ignition device (9) and the flame supervision device (10) are arranged in the annular space between the inner flame port ring (2) and the outer flame port ring (3).

10. A hotplate according to any of claims 1 through 9 characterized in that a temperature-controlled valve (8) preferably controlled by a bi-metallic means is incorporated in the burner body (5) for operation below design temperature.

11. A hotplate according to any of claims 3 to 10 characterized in that the tray (11) is made of stainless steel or enamelled metal plate of a thickness of less than approximately 1 mm and preferably less than 0.5 mm.

12. A hotplate according to any of claims 3 through 11 characterized in that the bottom face of the tray (11) is covered by a thin coating allowing little thermal radiation to pass through and preferably by an aluminium coating.

**Revendications**

1. Table de travail pour cuisinières à gaz équipée d'un brûleur fonctionnant avec un prémélange en excès d'air , composé d'une tête de brûleur (1) placée dans une cuvette (11), d'un mélangeur (7) raccordé à la tête du brûleur et assurant l'acheminement du mélange gaz/air de combustion jusqu'à la tête du brûleur et d'un injecteur (18), situé à l'amont du mélangeur, tel que le gaz sortant de l'injecteur aspire la totalité de l'air de combustion, caractérisé par le fait, que la tête du brûleur (1) raccordée au mélangeur (7) par une bague isolante (6) en matière cérmique, est munie à l'intérieur et à l'extérieur d'une bague de stabilisation perforée (2, 3) résistant à la chaleur et à l'atmosphère réductrice et oxydante les deux bagues étant disposées d'une façon concentrique par rapport à l'axe du brûleur, entre le siège de la tête du brûleur (5) et son couvercle à surface plane (4) et que seul les orifices de la bague intérieure (2) sont dimensionnés de manière à éviter le retour des flammes.

2. Table de travail pour cuisinières à gaz suivant la revendication 1, avec plaque de recouvrement perméable au rayonnement, de préférence en vitrocéramique ou similaire, caractérisé par le fait que le couvercle (4) de la tête du brûleur est en contact avec ladite plaque de recouvrement, que la cuvette (11), en tôle métallique résistant à la corrosion, est conçue sous forme d'un réflecteur (13) de préférence en forme de tronc de cône au-dessous duquel se situe au moins un deuxième réflecteur et qu'au moins la tête du brûleur est logée de façon élastique.

3. Table de travail pour cuisinières à gaz suivant la revendication 1, caractérisée par le fait que la cuvette (11) en tôle métallique résistant à la corrosion est disposé de marière concave de façon que la distance entre le fond de la casserole (20) et la cuvette (11) diminue graduellement de l'intérieur vers l'extérieur, que la cuvette (11) est munie de plusieurs grilles-support radiales (12) et d'une ouverture (15) pour recevoir les éventuelles débordements et que la tête du brûleur (1) est logée dans la cuvette (11) de façon que le dessus du couvercle de la tête du brûleur (4) se trouve au même niveau que le côté supérieur de la grille- support (12) et qu'un réflecteur (13) se trouve au -dessous de la cuvette (11) dans la cuvette de propreté.

4. Table de travail pour cuisinières à gaz suivant l'une des revendications 1 à 3, caractérisée par le fait que le diamètre hydraulique des orifices de sortie de la bague intérieure (2) est inférieur à 1,2 mm, de préférence entre 0,8 mm et 1,2 mm, et que celui de la bague extérieure (3) est supérieur à 1,2 mm, de préférence entre 1, 2 mm et 3,0 mm.

5. Table de travail pour cuisinières à gaz suivant l'une des revendications 1 à 4, caractérisée par le fait que les bagues (2, 3) sont en acier au chrome à teneur d'aluminium, mais sans nickel.

6. Table de travail pour cuisinières à gaz suivant l'une des revendications 1 à 4, caractérisée par le fait que les bagues (2, 3) sont en céramique.

7. Table de travail pour cuisinières à gaz suivant l'une des revendications 1 à 6, caractérisée par le fait que le couvercle de la tête du brûleur (4) et de préférence aussi le siège (5) sont en céramique.

8. Table de travail pour cuisinières à gaz suivant la revendication 7 caractérisée par le fait que le siège (5) et la bague isolante (6) forment une seule pièce.

9. Tabe de travail pour cuisinières à gaz suivant l'une des revendications 1 à 8, caractérisée par le fait que le dispositif d'allumage et le dispositif de sécurité à l'allumage et à l'extinction (9, 10) sont disposés dans l'espace annulaire entre la bague intérieure (2) et la bague extérieure (3).

10. Table de travail pour cuisinières à gaz suivant l'une des revendications 1 à 9, caractérisée par le fait qu'un robinet d'allumage à froid (8) à commande thermique, de préférence bi-métallique, est disposé au siège de la tête du brûleur (5).

11. Table de travail pour cuisinières à gaz suivant l'une des revendications 3 à 10, caractérisée par le fait que la cuvette (11) est en acier fin ou en tôle émailée, d'une épaisseur inférieure à environ 1 mm, de préférence inférieure à 0,5 mm.

12. Table de travail pour cuisinières à gaz suivant l'une des revendications 3 à 11, caractérisée par le fait que la surface inférieure de la cuvette (11) et munie d'un mince film de revêtement à faible rayonnement, de préférence d'une couche d'aluminium.

FIG. 1

FIG. 2

# FIG. 3